# EUROPÄISCHE PATENTSCHRIFT

(11) **EP 3 635 226 B1**
(45) Veröffentlichungstag und Bekanntmachung des Hinweises auf die Patenterteilung: **04.08.2021**
(21) Anmeldenummer: 18726467.6
(22) Anmeldetag: 23.05.2018
(51) Int. Cl.: F01N 5/02, F02G 5/02, F01N 3/02, F28D 7/16, F01N 3/20

(54) **VORRICHTUNG ZUR WÄRMERÜCKGEWINNUNG AUS EINEM ABGAS**
DEVICE FOR RECOVERING HEAT FROM AN EXHAUST GAS
DISPOSITIF DE RÉCUPÉRATION DE LA CHALEUR D'UN GAZ D'ÉCHAPPEMENT

(30) Priorität: 08.06.2017 DE 102017209726
(43) Veröffentlichungstag der Anmeldung: 15.04.2020
(73) Patentinhaber: Volkswagen Aktiengesellschaft, 38440 Wolfsburg (DE)
(72) Erfinder: GOCKEL, Jens, 59909 Bestwig-Heringhausen (DE); LÄMMER, Hilmar, 34281 Gudensberg (DE); URBAN, Christian, 30173 Hannover (DE)
(86) Internationale Anmeldenummer: PCT/EP2018/063430
(87) Internationale Veröffentlichungsnummer: WO 2018/224302

(56) Entgegenhaltungen:
- EP-A1- 1 852 585
- DE-A1-102010 011 472
- JP-A- 2008 133 782
- US-A1- 2011 131 961
- US-A1- 2012 036 850
- US-A1- 2015 129 173

## Beschreibung

Die Erfindung betrifft eine Vorrichtung zur Wärmerückgewinnung aus einem Abgas, welches im Betrieb einer das Abgas erzeugenden Abwärmequelle ein Abgassystem durchströmt. Das Abgassystem weist hierbei mindestens eine Abgasnachbehandlungsvorrichtung sowie mindestens eine Wärmeübertrageranordnung auf, wobei die Wärmeübertrageranordnung stromabwärts einer Komponente der Abgasnachbehandlungsvorrichtung und innerhalb der Abgasnachbehandlungsvorrichtung angeordnet ist und die einen von einem Nebenströmungskanal umgebenen Hauptströmungskanal aufweisende Wärmeübertrageranordnung im Betrieb der Abwärmequelle zur Übertragung von Wärme in ein Arbeitsfluid von dem Abgas sowie dem Arbeitsfluid durchströmt wird.

Eine gattungsbildende Abgastraktanordnung für insbesondere Lastkraftwagen offenbart in diesem Zusammenhang die WO 2015/197088 A1, wobei die Abgastraktanordnung neben zwei Wärmetauschvorrichtungen auch eine Abgasnachbehandlungskomponente aufweist. Hierbei sind die Wärmetauschvorrichtungen direkt im Abgastrakt eines Verbrennungsmotors angeordnet und werden jeweils vom Abgas des Verbrennungsmotors durchströmt. Dabei ist eine der Wärmetauschvorrichtungen dazu vorgesehen dem Abgas Wärme zuzuführen, während die zweite Wärmetauschvorrichtungen dazu bestimmt ist dem Abgas Wärme zu entziehen. Die dem Abgas Wärme zuführende Wärmetauschvorrichtung ist hierbei stromaufwärts, die dem Abgas Wärme entziehende Wärmetauschvorrichtung stromabwärts der Abgasnachbehandlungskomponente angeordnet. Beide Wärmetauschvorrichtungen sind mit einem Fluidkreislauf verbunden, welcher einen Wärmetransport ermöglicht. Die dem Abgas Wärme zuführende Wärmetauschvorrichtung ist hierbei in einem Nebenzweig des Fluidkreislaufes angeordnet und dient der Überbrückung eines zusätzlich zum Verbrennungsmotor auf den Antriebstrang eines Kraftfahrzeuges wirkenden Hilfsmotors, insbesondere in Betriebszuständen geringer Last. Die zweite, dem Abgas Wärme entziehende Wärmtauschvorrichtung kann in diesem Zusammenhang zudem integraler Bestandteil der Abgasnachbehandlung sein. Die dem Abgas Wärme entziehende Wärmetauschvorrichtung wird hierbei in jedem Betriebszustand von dem Abgas durchströmt, was insbesondere in Fällen hoher Last zu einer Überhitzung der Wärmetauschvorrichtung führen kann.

Durch die DE 10 2011 016 886 A1 wird die Anordnung einer als thermoelektrischer Generator ausgebildeten Wärmetauschvorrichtung innerhalb des Abgastraktes eines Verbrennungsmotors eines Kraftfahrzeuges beschrieben. Der Abgastrakt kann hierbei zudem weitere Abgasnachbehandlungskomponenten aufweisen. Die Wärmetauschvorrichtung ist hierbei so ausgestaltet, dass diese mehrere auf einer Kreisbahn beabstandet angeordnete Wärmetauscherrohre aufweist, welche zwischen einem Gehäuse und einer als Bypass dienenden Durchführungsleitung angeordnet sind. An einem auslasseitigen Ende der Durchführungsleitung ist eine Steuerklappe angeordnet mittels welcher die Durchführungsleitung verschließbar ausgeführt ist. Bei Verschluss der Durchführungsleitung tritt das in die Wärmetauschvorrichtung einströmende Abgas radial durch Öffnungen über die Wärmetauscherrohre hinweg in einen Zwischenraum zwischen Durchführungsleitung und Gehäuse über welche es anschließend in den Auslassbereich gelangt. Die Wärmetauscherrohre verfügen neben ringförmig ausgeprägten thermoelektrischen Elementen über einen von Kühlfluid durchströmten inneren Kanal. Aufgrund des durch Abgas und Kühlfluid erzeugten Temperaturgradienten lässt sich mittels der thermoelektrischen Elemente thermische in elektrische Energie umwandeln. Durch die Anordnung der Steuerklappe innerhalb der Wärmetauschvorrichtung muss eine die Sperrklappe bewegende Klappenwelle nachteilig eine hohe Länge aufweisen, um bis in das Innere der Durchführungsleitung hineinzureichen. Dies bedingt geringe Fertigungstoleranzen der Klappenwellen und deren Lagerung, was in Verbindung mit den im Abgastrakt erreichten Temperaturen zu Verzug und Fehlfunktionen der Sperrklappe führt.

Die Offenbarung der DE 10 2013 114 815 A1 beinhaltet eine zu der DE 10 2011 016 886 A1 gattungsbildende Wärmetauschvorrichtung, welche sich ebenfalls zur Anordnung im Abgastrakt eines Fahrzeuges, was insbesondere auch Lastkraftwagen einschließt, eignet. Auch diese Wärmetauschvorrichtung nutzt thermoelektrische Elemente zur Umwandlung thermischer Energie in elektrische Energie.

Die US 2012/ 036 850 A1 beschreibt zudem den Abgastrakt einer Brennkraftmaschine, wobei in diesem Abgastrakt mehrere Abgasnachbehandlungsvorrichtungen, wie beispielsweise ein Partikelfilter sowie ein SCR-Katalysator, angeordnet sind. Sich an den SCR-Katalysator anschließend ist hierbei zudem ein Wärmetauscher ausgeführt, welcher einen über eine ausgangsseitig des Wärmetauschers angeordnete Stellklappe steuerbaren Bypass aufweist. In einer Ausführungsform können die Abgasnachbehandlungsvorrichtungen sowie der Wärmetauscher in einer integrierten Baugruppe ausgeführt sein.

Der US 2015 / 129 173 A1, der US 2011 / 131 961 A1, der EP 1 852 585 A1 sowie der DE 10 2010 011 472 A1 sind zudem jeweils Wärmetauscher mit einem innenliegenden Bypassrohr zu entnehmen, wobei diese von einem Spiralrohr umgeben sind. Ausgangseitig des Bypassrohres ist wiederum eine Stellklappe angeordnet, mittels welcher der Durchfluss eines Mediums durch das Bypassrohr einstellbar ist.

Die JP 2008 - 133 782 A (D5) zeigt ebenfalls einen Wärmetauscher mit einem innenliegenden Bypassrohr, jedoch einer eingangsseitig angeordneten Stellklappe, um einen Abgasstrom durch einen Wärmetauscherkanal oder das Bypassrohr zu leiten. Zur Realisierung der Wärmeübertragung ist um das Bypassrohr im Wärmetauscherkanal ein von einem Medium durchströmbares Rohrsystem angeordnet.

Vor diesem Hintergrund liegt der Erfindung die Aufgabe zugrunde, die Vorrichtung der eingangs genannten Art derart auszuführen, dass die Vorrichtung zur Wärmerückgewinnung einen geringen Bauraumbedarf sowie eine geringe Fehleranfälligkeit gegenüber im Stand der Technik offenbarten Lösungen aufweist.

Diese Aufgabe wird gelöst mit einer Vorrichtung gemäß den Merkmalen des Patentanspruches 1. Die Unteransprüche betreffen besonders zweckmäßige Weiterbildungen der Erfindung. Erfindungsgemäß ist also eine Vorrichtung zur Wärmerückgewinnung aus einem Abgas vorgesehen, wobei das Abgas im Betrieb einer das Abgas erzeugenden Abwärmequelle ein Abgassystem durchströmt. Dabei weist das Abgassystem mindestens eine Abgasnachbehandlungsvorrichtung sowie mindestens eine Wärmeübertrageranordnung auf, wobei die Wärmeübertrageranordnung stromabwärts einer Komponente der Abgasnachbehandlungsvorrichtung und innerhalb der Abgasnachbehandlungsvorrichtung angeordnet ist. Die Wärmeübertrageranordnung wird zudem im Betrieb der Abwärmequelle zur Übertragung von Wärme in ein Arbeitsfluid von dem Abgas sowie dem Arbeitsfluid durchströmt. Weiterhin weist die Wärmeübertrageranordnung erfindungsgemäß einen von einem Nebenströmungskanal umgebenen Hauptströmungskanal sowie ein innerhalb des Nebenströmungskanals angeordnetes Wärmeübertragerelement auf. Hierbei ist stromabwärts eines Auslasses des Hauptströmungskanals der Wärmeübertrageranordnung und dabei außerhalb der Abgasnachbehandlungsvorrichtung ein Kanalverschlusselement angeordnet, welches der Regulierung des Volumenstromes des Abgases durch den Hauptströmungskanal und/oder den Nebenströmungskanal dient. Regulieren kann dabei im Sinne von regeln und/oder steuern verstanden werden, wobei die Anteile des Volumenstromes durch Hauptströmungskanal und Nebenströmungskanal in Abhängigkeit einer Öffnungsrate, also dem Verhältnis der durchströmbaren Querschnittsfläche des Hauptströmungskanals zur Gesamtquerschnittsfläche des Hauptströmungskanals des Kanalverschlusselementes, regulierbar sind. Ist hierbei die Öffnungsrate maximal, so durchströmt das Abgas im Wesentlichen den Hauptströmungskanal, welcher somit als ein Bypass für den Nebenströmungskanal dient. Ist hingegen die Öffnungsrate minimal, so durchströmt das Abgas im Wesentlichen den Nebenströmungskanal, wodurch Wärme aus dem Abgas über das Wärmeübertragerelement in das Arbeitsfluid übertragen wird.

Das nicht in die Wärmeübertrageranordnung integrierte Kanalverschlusselement ist erfindungsgemäß stromabwärts der Wärmeübertrageranordnung und erfindungsgemäß stromabwärts der Abgasnachbehandlungsvorrichtung angeordnet, wobei denkbar ist, dass sich das Kanalverschlusselement direkt an den Auslass des Hauptströmungskanals anschließt. Hierdurch ist es möglich, den Aufbau der Wärmeübertrageranordnung und/oder der Abgasnachbehandlungsvorrichtung, in welcher die Wärmeübertrageranordnung bevorzugt angeordnet ist, zu vereinfachen. Andererseits können auf Basis einer solchen Ausgestaltung bereits am Markt erhältliche Kanalverschlusselemente gewinnbringend eingesetzt werden.

Das Kanalverschlusselement kann als eine Abgasklappe ausgebildet sein, deren Winkelstellung den Volumenstrom durch den Hauptströmungskanal und/oder den Nebenströmungskanal reguliert. Aufgrund der Anordnung stromabwärts und erfindungsgemäß außerhalb der Wärmeübertrageranordnung wären höhere Fertigungstoleranzen möglich, wodurch die Möglichkeit einer Fehlfunktion, beispielsweise bei Erwärmung, verringert werden kann.

Im Falle der Abwärmequelle ist es annehmbar, dass diese als eine Brennkraftmaschine, z. B. als ein Verbrennungsmotor eines Kraftfahrzeuges, insbesondere eines Lastkraftwagens ausgebildet ist. Es besteht die Möglichkeit, dass der Verbrennungsmotor ein Ottomotor, insbesondere jedoch ein Dieselmotor ist.

Das Arbeitsfluid sollte aufgrund der durch das Wärmeübertragerelement übertragenen Wärme aus der flüssigen in die gasförmige Phase übergehen, demzufolge verdampft werden, wobei das Arbeitsfluid beispielsweise als Wasser, aber auch als ein Alkohol wie Ethanol ausgebildet sein kann. Zudem ließen sich als Arbeitsfluid Kältemittel unterschiedlicher Ausprägung einsetzen.

In einer besonders vorteilhaften Weiterbildung der Erfindung ist das Wärmeübertragerelement als eine von dem Arbeitsfluid durchströmbare Rohrwendel aus einem im Wesentlichen spiralförmig verlaufenden Rohr ausgebildet. Denkbar ist hierbei, dass an einer äußeren Mantelfläche des spiralförmig verlaufenden Rohres und in Längsrichtung des Rohres zumindest abschnittsweise der Mittelachse des Rohres entgegengerichtet ausgeformte Rippen angeordnet sind, mittels welcher der Wärmefluss aus dem Abgas über die Rohrwendel in das Arbeitsfluid gesteigert werden kann. Zudem bietet eine Ausführung des Wärmeübertragerelementes als eine Rohrwendel gegenüber einer Ausführungsvariante mit mehreren geradlinig sowie im Wesentlichen parallel zueinander und parallel zum Haupt- sowie Nebenströmungskanal verlaufenden Einzelrohren den Vorteil, dass sich keine Ungleichverteilung des Volumenstromes des Heizfluides einstellt, wodurch eine lokale Überhitzung und/oder Unterkühlung von Einzelrohren vermieden werden kann. In einem solchen Fall könnte sich eine ungleichmäßige oder gar ausbleibende Verdampfung des Arbeitsfluides und/oder ein Defekt der lokal überhitzten Einzelrohre einstellen. Um dies zu vermeiden wird beispielsweise bei Plattenwärmeübertragern ein Diffusor verwendet, auf welchen bei einer Ausgestaltung mit einer Rohrwendel demzufolge vorteilhaft verzichtet werden könnte.

In einer Ausbildung der Erfindung kann die Abgasnachbehandlungsvorrichtung oder eine Komponente der Abgasnachbehandlungsvorrichtung zudem als ein SCR-Katalysator ausgebildet sein, wobei ein SCR-Katalysator dabei einen Katalysator zur Verminderung des Stickoxid-Anteiles im Abgas mittels einer selektiven katalytischen Reaktion darstellt, welche durch Einbringen einer Harnstofflösung in das Abgassystem stromaufwärts des SCR-Katalysators und/oder direkt in den SCR-Katalysator erfolgt.

Eine weitere überaus gewinnbringende Ausführungsform der Erfindung ist dadurch gekennzeichnet, dass die Wärmeübertrageranordnung und/oder ein Einlass des Hauptströmungskanals der Wärmeübertrageranordnung durch ein stromaufwärts der Wärmeübertrageranordnung angeordnetes, sich unterscheidende Querschnittskonturen ausgleichendes Übergangselement mit der Abgasnachbehandlungsvorrichtung oder der Komponente der Abgasnachbehandlungsvorrichtung, fluidführend wirkverbunden ist. Auf Basis einer solchen Ausgestaltung ist denkbar, dass die Abgasnachbehandlungsvorrichtung und/oder die Komponente der Abgasnachbehandlungsvorrichtung aneinander, und/oder die Wärmeübertrageranordnung innerhalb der Abgasnachbehandlungsvorrichtung mit der Komponente der Abgasnachbehandlungsvorrichtung, in kompakter Bauweise parallel und orthogonal zur jeweiligen Durchströmungsrichtung beabstandet zueinander, beispielsweise untereinander, angeordnet werden können. Das Übergangselement könnte hierfür nach Art eines Trichters ausgeformt sein, um einen Auslass der Abgasnachbehandlungsvorrichtung oder der Komponente der Abgasnachbehandlungsvorrichtung mit dem Einlass der Wärmeübertrageranordnung und/oder dem Einlass des Hauptströmungskanals der Wärmeübertrageranordnung fluiddurchlässig zu verbinden.

Als besonders nutzbringend ist eine Ausführungsform der Erfindung anzusehen, bei welcher die Wärmeübertrageranordnung oder der Hauptströmungskanal der Wärmeübertrageranordnung eine Schalldämpferstruktur aufweist und/oder eine Schalldämpferstruktur Teil des Hauptströmungskanals der Wärmeübertrageranordnung ist. Durch die Ausgestaltung der Wärmeübertrageranordnung und/oder des Hauptströmungskanales mit einer Schalldämpferstruktur lässt sich gewinnbringend Bauraum einsparen und eine Gewichtsreduktion des Abgassystems erzielen, indem gegebenenfalls auf einen dem Abgassystem zugehörigen und stromaufwärts oder stromabwärts der Vorrichtung angeordneten Schalldämpfer verzichtet werden könnte.

Wird weiterhin der Hauptströmungskanal durch ein von einem Gehäuse umschlossenes Fluidrohr und/oder der einen Einlass und einen Auslass aufweisende Nebenströmungskanal durch einen Fluidraum gebildet, welcher zwischen dem Fluidrohr und dem das Fluidrohr umschließende Gehäuse ausgebildet ist, so kann dadurch überaus erfolgversprechend ein Grundaufbau von Hauptströmungskanal und/oder Nebenströmungskanal realisiert werden, welcher eine äußerst geringe Fehleranfälligkeit aufweist.

Das Gehäuse dürfte das den Hauptströmungskanal bildende Fluidrohr hierbei nur insoweit umschließen, als das über den Einlass des Hauptströmungskanals und somit über das den Einlass des Hauptströmungskanal bildende, stirnseitige Ende des Fluidrohrs weiterhin Abgas in den Hauptströmungskanal einströmen kann.

Der Nebenströmungskanal sollte hierbei ausschließlich über seinen Einlass mit dem Hauptströmungskanal verbunden sein, wobei dieser beispielsweise durch eine Öffnung oder mehrere Öffnungen in der Wandung des den Hauptströmungskanal bildenden Fluidrohrs ausgeformt sein könnte. Die Öffnung oder die Öffnungen an sich könnten dabei an dem den Einlass des Hauptströmungskanals bildenden Ende des Fluidrohrs im Fluidrohr ausgebildet sein. Hingegen kann vorgesehen sein, dass der Auslass des Nebenströmungskanals nicht mit dem Hauptströmungskanal, wenigstens jedoch nicht unmittelbar mit dem Hauptströmungskanal fluidführend wirkverbunden ist, wobei fluidführend wirkverbunden ebenfalls als fluiddurchlässig beschrieben werden kann.

Die fluidführend wirkverbundene oder fluiddurchlässige Verbindung bedeutet in diesem Zusammenhang eine stoffdurchlässige Verbindung, welche wenigstens für Fluide sowie Gase durchlässig ist. Eine Durchlässigkeit für feste Stoffe ist hierbei jedoch nicht ausgeschlossen. Ebenso ist es als selbstverständlich anzusehen, dass über diese fluiddurchlässige Verbindung ebenfalls Energie übertragen werden kann.

In einer überaus gewinnbringenden Weiterbildung der Erfindung besteht ebenso die Möglichkeit, dass der Hauptströmungskanal durch das Fluidrohr und ein innerhalb des Fluidrohres angeordnetes Dämpferrohr gebildet wird, wobei der Einlass des Hauptströmungskanals in dem Fluidrohr und der Auslass des Hauptströmungskanals in dem Dämpferrohr ausgebildet ist. Hierbei könnte in vorteilhafter Weise das Dämpferrohr einen geringeren Durchmesser aufweisen, als das das Dämpferrohr umfassende Fluidrohr, wodurch bei Durchströmung des Abgases aufgrund des geringeren Durchmessers gegenüber dem Fluidrohr insbesondere tieffrequente akustische Emissionen gedämpft werden würden. Das Dämpferrohr kann hierbei gegenüber dem Fluidrohr einen stromabwärts gerichteten Überstand aufweisen und dabei das Fluidrohr an seinem stromabwärts ausgerichteten Ende einseitig, in Richtung des Dämpferrohres gerichtet, verschlossen sein, sodass kein Abgas über das Fluidrohr austritt. Dabei wäre denkbar, dass das Fluidrohr und das Dämpferrohr eine Einheit bilden, also einteilig ausgebildet sind. Eine mehrteilige Ausbildung von Dämpferrohr und Fluidrohr ist weiterhin ebenso möglich. Zwischen Dämpferrohr und Fluidrohr kann hierbei ein Stoffschluss, jedoch ebenso ein Form- und/oder Kraftschluss vorliegen. Dämpferrohr und Fluidrohr sollten weiterhin koaxial zueinander ausgerichtet und angeordnet sein.

Weist zudem das Dämpferrohr zumindest zwei Abschnitte auf, wobei ein erster Abschnitt einen geringeren Außendurchmesser und/oder Innendurchmesser als das Fluidrohr aufweist und/oder ein zweiter Abschnitt des Dämpferrohres als ein trichterförmig ausgeformter Übergangsbereich ausgebildet ist, wobei ein Außendurchmesser des Übergangsbereiches einem Innendurchmesser des Fluidrohres entspricht, dann ist aufgrund des zweiten Abschnittes des Dämpferrohres in Form des trichterförmig ausgeprägten Übergangsbereiches ein Einströmen des Abgases aus dem Fluidrohr in das Dämpferrohr ohne die Entstehung starker Verwirbelungen des Abgases möglich, aufgrund derer eine gesteigerte Entstehung akustischer Emissionen denkbar wäre.

Eine vorteilhafte Gestaltung des zweiten, trichterförmigen Abschnittes des Dämpferrohres kann darin bestehen, dass an dem, dem Einlass des Hauptströmungskanals zugewandten Ende des zweiten Abschnittes ein umlaufender Bund ausgebildet ist, der das Dämpferrohr radial an der Innenwand des Fluidrohres abstützt. Hierdurch würde überdies die Anlagefläche zwischen dem zweiten Abschnitt des Dämpferrohres und dem Fluidrohr vergrößert und dadurch die Dichtheit gegenüber dem einströmenden Abgas erhöht.

Ist die erfindungsgemäße Vorrichtung ferner so weitergebildet, dass die Schalldämpferstruktur durch das Fluidrohr, das Dämpferrohr und einem Dämpfermaterial ausgebildet ist, wobei das Dämpfermaterial in einem zwischen dem Fluidrohr und dem Dämpferrohr ausgeprägtem Dämpfervolumen angeordnet ist, kann der im Wärmeübertrager sowie der Abgasnachbehandlungsvorrichtung zur Verfügung stehende Bauraum auf eine optimale Weise genutzt werden, um einerseits eine Wärmerückgewinnung aus dem den Wärmeübertrager durchströmenden Abgas und andererseits eine Dämpfung der akustischen Emissionen zu erreichen.

Das Dämpferrohr müsste hierbei in seinem ersten Abschnitt die Wandung des Dämpferrohres in radiale Richtung durchbrechende Dämpferöffnungen aufweisen, wobei das Dämpfervolumen von dem ersten sowie zweiten Abschnitt des Dämpferrohres und dem einseitig verschlossenen Fluidrohr umschlossen wird.

Weiterhin lässt sich eine vorteilhafte Ausführungsform der Erfindung dadurch beschreiben, dass der Nebenströmungskanal und/oder der Auslass des Nebenströmungskanals über einen Verschlussbypasskanal stromabwärts des Verschlusselementes mit dem Abgassystem oder der Nebenströmungskanal und/oder der Auslass des Nebenströmungskanals mit der Umwelt fluiddurchlässig verbunden ist. Somit ist zum einen denkbar, dass das in den Nebenströmungskanal eingeströmte Abgas über den Verschlussbypasskanal in das Abgassystem stromabwärts des Kanalverschlusselementes zurückgeleitet wird, wodurch der Kanal entsprechend das Kanalverschlusselement überbrückt. Dies erfolgt, um das im Nebenströmungskanal befindliche Abgas wieder aus diesem ausströmen zu lassen. Andererseits ist es ebenso im Bereich des Möglichen, dass das den Nebenströmungskanal durchströmende Abgas über den Auslass des Nebenströmungskanals direkt in die Umwelt eingeleitet wird. Der Auslass des Nebenströmungskanals kann somit als zweiter Ausgang des Abgassystems fungieren. Die direkte Einleitung des Abgases in die Umwelt ist dabei als unkritisch zu betrachten, da aufgrund der Anordnung der Wärmeübertrageranordnung erfindungsgemäß stromabwärts der Komponente oder den Komponenten der Abgasnachbehandlungsvorrichtung innerhalb der Abgasnachbehandlungsvorrichtung das Abgas bereits der Abgasnachbehandlung unterzogen wurde.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Schnittdarstellung einer erfindungsgemäßen Vorrichtung;
- Fig. 2: eine nicht erfindungsgemäße Weiterbildung der Vorrichtung;
- Fig. 3: eine Detaildarstellung einer Wärmeübertrageranordnung.

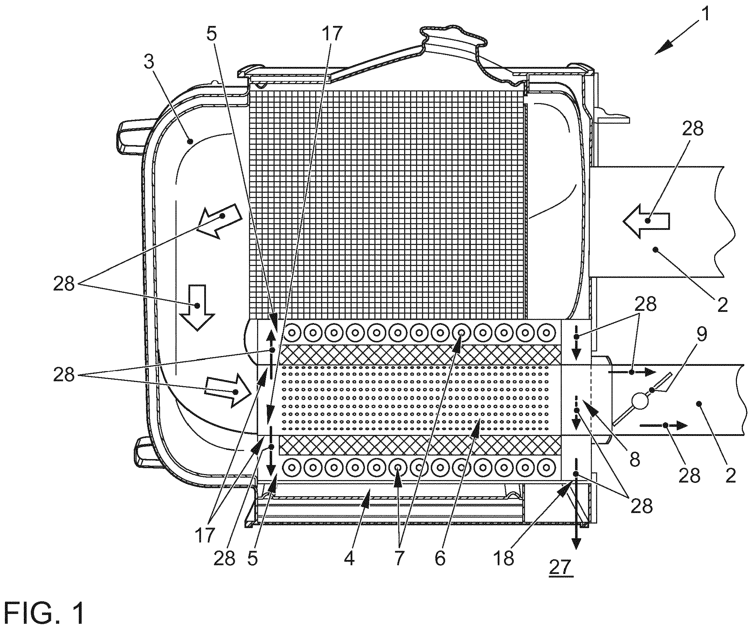

Figur 1 zeigt eine Schnittdarstellung einer erfindungsgemäßen Vorrichtung 1 zur Wärmerückgewinnung aus einem Abgas. Das Abgas durchströmt hierbei im Betrieb einer das Abgas erzeugenden Abwärmequelle das Abgassystem 2. Dabei weist das Abgassystem 2 der in Figur 1 dargestellten Weiterbildung die Abgasnachbehandlungsvorrichtung 3 sowie die Wärmeübertrageranordnung 4 auf. Die Wärmeübertrageranordnung 4 ist wie dargestellt stromabwärts und innerhalb der Abgasnachbehandlungsvorrichtung 3 angeordnet und weist eine von dem Nebenströmungskanal 5 umgebenen Hauptströmungskanal 6 sowie das innerhalb des Nebenströmungskanals 5 angeordnete Wärmeübertragerelement 7 auf. Dieses dient im Betrieb der Abwärmequelle der Übertragung von Wärme in ein das Wärmeübertragerelement 7 durchströmendes Arbeitsfluid. Überdies ist stromabwärts des Auslasses 8 des Hauptströmungskanals 6 der Wärmeübertrageranordnung 4 das Kanalverschlusselement 9 angeordnet, welches der Regulierung des Volumenstromes durch den Hauptströmungskanal 6 sowie den Nebenströmungskanal 5 dient. Der Volumenstrom des Abgases durch den Hauptströmungskanal 6 sowie den Nebenströmungskanal 5 ist dabei in Abhängigkeit der Öffnungsrate des stromabwärts der Wärmeübertrageranordnung 4 angeordneten Kanalverschlusselementes 9 regulierbar. Hierfür ist der Nebenströmungskanal 5 ausschließlich über den Einlass 17 des Nebenströmungskanals 5 mit dem Hauptströmungskanal 6 fluiddurchlässig verbunden. Das Kanalverschlusselement 9 ist in dieser Weiterbildung teilgeöffnet, sodass das Abgas sowohl den Hauptströmungskanal 6, als auch über den Einlass 17 in den Nebenströmungskanal 5 strömt. Nach Durchtritt durch den Nebenströmungskanal 5 sowie den Hauptströmungskanal 6 strömt das Abgas einerseits durch das sich stromabwärts des Kanalverschlusselementes 9 anschließende Abgassystem 2. Andererseits wird das Abgas über den Auslass 18 des Nebenströmungskanals 5 in die Umwelt 27 geleitet. Die Strömung des Abgases ist den Pfeilen 28 zu entnehmen.

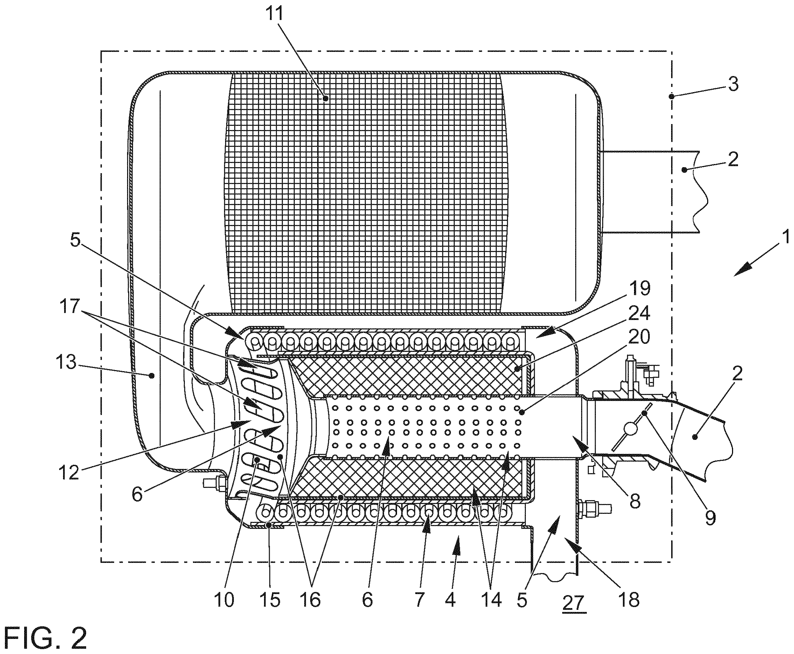

Figur 2 stellt eine nicht erfindungsgemäße Weiterbildung der Vorrichtung 1 dar. Die stromabwärts und innerhalb der Abgasnachbehandlungsvorrichtung 3 angeordnete Wärmeübertrageranordnung 4, d. h. der Einlass 12 des Hauptströmungskanals 6 der Wärmeübertrageranordnung 4, ist hierbei über das trichterförmig ausgebildete Übergangselement 13 mit der stromaufwärts der Wärmeübertrageranordnung 4 angeordneten Komponente 11 der Abgasnachbehandlungsvorrichtung 3 fluidführend wirkverbunden. Die Komponente 11 an sich ist dabei als ein SCR-Katalysator ausgebildet. Die Wärmeübertrageranordnung 4 zeigt wiederum den von dem Nebenströmungskanal 5 umgebenen Hauptströmungskanal 6 sowie das innerhalb des Nebenströmungskanals 5 angeordnete Wärmeübertragerelement 7, wobei dieses als die Rohrwendel 10 ausgebildet ist. Der Hauptströmungskanal 6 wird durch das vom Gehäuse 15 umschlossene Fluidrohr 16 sowie dem innerhalb des Fluidrohres 16 angeordneten Dämpferrohr 20 gebildet. Dabei ist der Einlass 12 des Hauptströmungskanals 6 in dem Fluidrohr 16 und der Auslass 8 des Hauptströmungskanals 6 in dem Dämpferrohr 20 ausgebildet. Weiterhin wird der Nebenströmungskanal 5 im Wesentlichen durch den Fluidraum 19 gebildet, welcher zwischen dem Fluidrohr 16 und dem das Fluidrohr 16 umschließenden Gehäuse 15 ausgeprägt ist. Zudem zeigt die Wärmeübertrageranordnung 4 die Schalldämpferstruktur 14 , welche Teil des Hauptströmungskanals 6 der Wärmeübertrageranordnung 4 ist. Die Schalldämpferstruktur 14 besteht dabei aus dem Fluidrohr 16, dem Dämpferrohr 20 und dem Dämpfermaterial 24, wobei das Dämpfermaterial 24 zwischen dem Fluidrohr 16 und dem Dämpferrohr 20 angeordnet ist. Überdies ist der Nebenströmungskanal 5 und hierbei der Auslass 18 des Nebenströmungskanals 5 mit der Umwelt 27 fluiddurchlässig verbunden, sodass ein über den Nebenströmungskanal strömendes Abgas in die die Abgasnachbehandlungsvorrichtung 3 umgebende Umwelt 27 ausgestoßen wird. Nach Durchtritt durch den Hauptströmungskanal 6 würde das Abgas hingegen auf die Passage des Kanalverschlusselementes 9 folgend innerhalb des sich an das Kanalverschlusselement 9 anschließende Abgassystem 2 eingeleitet.

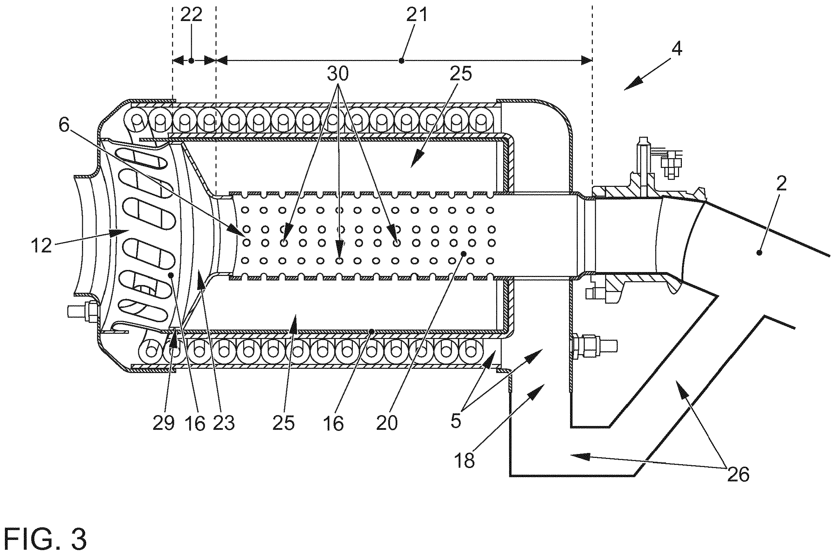

In Figur 3 ist eine Darstellung der Wärmeübertrageranordnung 4 im Detail aufgezeigt. Hierbei lässt sich Figur 3 entnehmen, dass das Dämpferrohr 20 zumindest zwei Abschnitte 21, 22 aufweist, wobei der erste Abschnitt 21 einen geringeren Außendurchmesser sowie Innendurchmesser als das Fluidrohr 16 aufweist. Der zweite Abschnitt 22 des Dämpferrohrs 20 ist zudem als ein trichterförmig ausgeformter Übergangsbereich 23 ausgebildet, wobei der Außendurchmesser des Übergangsbereiches 23 dem Innendurchmesser des Fluidrohres 16 entspricht. Der Übergangsbereich 23, also der zweite, trichterförmige Abschnitt 22 des Dämpferrohres 20 verfügt über einen, an dem dem Einlass 12 des Hauptströmungskanals 6 zugewandten Ende des zweiten Abschnittes 22 ausgebildeten umlaufenden Bund 29. Die Funktion des Bundes 29 liegt darin, das Dämpferrohr 20 radial an der Innenwand des Fluidrohres 16 abzustützen und die Anlagefläche zwischen dem zweiten Abschnitt 22 des Dämpferrohres 20 und dem Fluidrohr 21 zu vergrößern und dadurch die Dichtheit gegenüber dem einströmenden Abgas zu erhöhen. Das Dämpferrohr 20 weist zudem in seinem ersten Abschnitt 21 die Wandung des Dämpferrohres 20 in radiale Richtung durchbrechende Dämpferöffnungen 30 auf, welche den Hauptströmungskanal 6 mit dem Dämpfervolumen 25 fluiddurchlässig verbinden. Das Dämpfervolumen 25 wird hierbei vom ersten sowie zweiten Abschnitt 21, 22 des Dämpferrohres 20 und dem einseitig verschlossenen Fluidrohr 16 umschlossen. Der Nebenströmungskanal 5 und hierbei der Auslass 18 des Nebenströmungskanals 5 ist im Gegensatz zu den in Figur 1 sowie Figur 2 dargestellten Weiterbildungen über den Verschlussbypasskanal 26 stromabwärts des Kanalverschlusselementes 9 mit dem Abgassystem 2 fluiddurchlässig verbunden.

**Bezugszeichenliste**

| | | | |
|---|---|---|---|
| 1 | Vorrichtung | 21 | Erster Abschnitt |
| 2 | Abgassystem | 22 | Zweiter Abschnitt |
| 3 | Abgasnachbehandlungsvorrichtung | 23 | Übergangsbereich |
| 4 | Wärmeübertrageranordnung | 24 | Dämpfermaterial |
| 5 | Nebenströmungskanal | 25 | Dämpfervolumen |
| | | | |
| 6 | Hauptströmungskanal | 26 | Verschlussbypasskanal |
| 7 | Wärmeübertragerelement | 27 | Umwelt |
| 8 | Auslass | 28 | Strömung |
| 9 | Kanalverschlusselement | 29 | Bund |
| 10 | Rohrwendel | 30 | Dämpferöffnung |
| | | | |
| 11 | Komponente | | |
| 12 | Einlass | | |
| 13 | Übergangselement | | |
| 14 | Schalldämpferstruktur | | |
| 15 | Gehäuse | | |
| | | | |
| 16 | Fluidrohr | | |
| 17 | Einlass | | |
| 18 | Auslass | | |
| 19 | Fluidraum | | |
| 20 | Dämpferrohr | | |

## Patentansprüche

1. Vorrichtung (1) zur Wärmerückgewinnung aus einem Abgas, welches im Betrieb einer das Abgas erzeugenden Abwärmequelle ein Abgassystem (2) durchströmt, das Abgassystem (2) mindestens eine Abgasnachbehandlungsvorrichtung (3) sowie mindestens eine Wärmeübertrageranordnung (4) aufweist, hierbei die Wärmeübertrageranordnung (4) stromabwärts einer Komponente der Abgasnachbehandlungsvorrichtung (3) und innerhalb der Abgasnachbehandlungsvorrichtung (3) angeordnet ist und die einen von einem Nebenströmungskanal (5) umgebenen Hauptströmungskanal (6) aufweisende Wärmeübertrageranordnung (4) im Betrieb der Abwärmequelle zur Übertragung von Wärme in ein Arbeitsfluid von dem Abgas sowie dem Arbeitsfluid durchströmt wird, **dadurch gekennzeichnet, dass** die Wärmeübertrageranordnung (4) zudem ein innerhalb des Nebenströmungskanals (5) angeordnetes Wärmeübertragerelement (7) aufweist, wobei stromabwärts eines Auslasses (8) des Hauptströmungskanals (6) und dabei außerhalb der Abgasnachbehandlungsvorrichtung (3) ein Kanalverschlusselement (9) angeordnet ist, welches der Regulierung des Volumenstromes durch den Hauptströmungskanal (6) und/oder den Nebenströmungskanal (5) dient.

2. Vorrichtung (1) nach Anspruch 1, **dadurch gekennzeichnet, dass** das Wärmeübertragerelement (7) als eine von dem Arbeitsfluid durchströmbare Rohrwendel (10) aus einem im Wesentlichen spiralförmig verlaufenden Rohr ausgebildet ist.

3. Vorrichtung (1) nach den Ansprüchen 1 oder 2, **dadurch gekennzeichnet, dass** die Abgasnachbehandlungsvorrichtung (3) oder eine Komponente (11) der Abgasnachbehandlungsvorrichtung (3) als ein SCR-Katalysator ausgebildet ist.

4. Vorrichtung (1) nach zumindest einem der vorangehenden Ansprüche, **dadurch gekennzeichnet, dass** die Wärmeübertrageranordnung (4) und/oder ein Einlass (12) des Hauptströmungskanals (6) der Wärmeübertrageranordnung (4) durch ein stromaufwärts der Wärmeübertrageranordnung (4) angeordnetes, sich unterscheidende Querschnittskonturen ausgleichendes Übergangselement (13) mit der Abgasnachbehandlungsvorrichtung (3) oder der Komponente (11) der Abgasnachbehandlungsvorrichtung (3) fluidführend wirkverbunden ist.

5. Vorrichtung (1) nach zumindest einem der vorangehenden Ansprüche, **dadurch gekennzeichnet, dass** die Wärmeübertrageranordnung (4) oder der Hauptströmungskanal (6) der Wärmeübertrageranordnung (4) eine Schalldämpferstruktur (14) aufweist und/oder eine Schalldämpferstruktur (14) Teil des Hauptströmungskanals (6) der Wärmeübertrageranordnung (4) ist.

6. Vorrichtung (1) nach zumindest einem der vorangehenden Ansprüche, **dadurch gekennzeichnet, dass** Hauptströmungskanal (6) durch ein von einem Gehäuse (15) umschlossenen Fluidrohr (16) gebildet ist und/oder der einen Einlass (17) und einen Auslass (18) aufweisende Nebenströmungskanal (5) durch einen Fluidraum (19) gebildet ist, welcher zwischen dem Fluidrohr (16) und dem das Fluidrohr (16) umschließende Gehäuse (15) ausgebildet ist.

7. Vorrichtung (1) nach zumindest einem der vorangehenden Ansprüche, **dadurch gekennzeichnet, dass** der Hauptströmungskanal (6) durch das Fluidrohr (16) und ein innerhalb des Fluidrohres (16) angeordnetes Dämpferrohr (20) gebildet wird, wobei der Einlass (12) des Hauptströmungskanals (6) in dem Fluidrohr (16) und der Auslass (8) des Hauptströmungskanals (6) in dem Dämpferrohr (20) ausgebildet ist.

8. Vorrichtung (1) nach zumindest einem der vorangehenden Ansprüche, **dadurch gekennzeichnet, dass** das Dämpferrohr (20) zumindest zwei Abschnitte (21, 22) aufweist, wobei ein erster Abschnitt (21) einen geringeren Außendurchmesser und/oder Innendurchmesser als das Fluidrohr (16) aufweist und/oder ein zweiter Abschnitt (22) des Dämpferrohrs (20) als ein trichterförmig ausgeformter Übergangsbereich (23) ausgebildet ist, wobei ein Außendurchmesser des Übergangsbereichs (23) einem Innendurchmesser des Fluidrohres (16) entspricht.

9. Vorrichtung (1) nach zumindest einem der vorangehenden Ansprüche, **dadurch gekennzeichnet, dass** die Schalldämpferstruktur (14) durch das Fluidrohr (16), das Dämpferrohr (20) und einem Dämpfermaterial (24) ausgebildet ist, wobei das Dämpfermaterial (24) in einem zwischen dem Fluidrohr (16) und dem Dämpferrohr (20) ausgeprägtem Dämpfervolumen (25) angeordnet ist.

10. Vorrichtung (1) nach zumindest einem der vorangehenden Ansprüche, **dadurch gekennzeichnet, dass** der Nebenströmungskanal (5) und/oder der Auslass (18) des Nebenströmungskanals (5) über einen Verschlussbypasskanal (26) stromabwärts des Kanalverschlusselementes (9) mit dem Abgassystem (2) oder der Nebenströmungskanal (5) und/oder der Auslass (18) des Nebenströmungskanals (5) mit der Umwelt (27) fluiddurchlässig verbunden ist.

## Claims

1. Device (1) for recovering heat from an exhaust gas, which flows through an exhaust gas system (2) during operation of a waste heat source generating the exhaust gas, the exhaust gas system (2) has at least one exhaust gas aftertreatment unit (3) and at least one heat exchanger arrangement (4), in this case, the heat exchanger arrangement (4) is arranged downstream of a component of the exhaust gas aftertreatment unit (3) and within the exhaust gas aftertreatment unit (3), and the heat exchanger arrangement (4) having one main flow channel (6) surrounding a secondary flow channel (5) is flowed through, during operation of the waste heat source for the transfer of heat into a working fluid, by the exhaust gas and the working fluid, **characterized in that** the heat exchanger arrangement (4) additionally has a heat exchanger element (7) arranged inside the secondary flow channel (5), wherein, downstream of an outlet (8) of the main flow channel (6) and thereby outside the exhaust gas aftertreatment unit (3), a channel closing element (9) is arranged which serves to regulate the volumetric flow through the main flow channel (6) and/or the secondary flow channel (5).

2. Device (1) according to claim 1, **characterized in that** the heat exchanger element (7) is designed as a tubular coil (10) through which the working fluid can flow and which is made from a tube running essentially in a spiral.

3. Device (1) according to claims 1 or 2, **characterized in that** the exhaust gas aftertreatment unit (3) or a component (11) of the exhaust gas aftertreatment unit (3) is designed as an SCR catalyst.

4. Device (1) according to at least one of the preceding claims, **characterized in that** the heat exchanger arrangement (4) and/or an inlet (12) of the main flow channel (6) of the heat exchanger arrangement (4) is operatively connected to the exhaust gas aftertreatment unit (3) or the component (11) of the exhaust gas aftertreatment unit (3) in a fluid-conducting manner by a transition element (13) arranged upstream of the heat exchanger arrangement (4) compensating for differing cross-sectional contours.

5. Device (1) according to at least one of the preceding claims, **characterized in that** the heat exchanger arrangement (4) or the main flow channel (6) of the heat exchanger arrangement (4) has a silencer structure (14), and/or a silencer structure (14) is part of the main flow channel (6) of the heat exchanger arrangement (4).

6. Device (1) according to at least one of the preceding claims, **characterized in that** the main flow channel (6) is formed by a fluid tube (16) enclosed by a housing (15), and/or the secondary flow channel (5) having an inlet (17) and an outlet (18) is formed by a fluid chamber (19), which is constructed between the fluid tube (16) and the housing (15) enclosing the fluid tube (16).

7. Device (1) according to at least one of the preceding claims, **characterized in that** the main flow channel (6) is formed by the fluid tube (16) and a damper tube (20) arranged inside the fluid tube (16), wherein the inlet (12) of the main flow channel (6) is constructed in the fluid tube (16), and the outlet (8) of the main flow channel (6) is constructed in the damper tube (20).

8. Device (1) according to at least one of the preceding claims, **characterized in that** the damper tube (20) has at least two segments (21, 22), wherein a first segment (21) has a smaller outer diameter and/or inner diameter than the fluid tube (16), and/or a second segment (22) of the damper tube (20) is designed as a funnel-shaped transition region (23), wherein an outer diameter of the transition region (23) corresponds to an inner diameter of the fluid tube (16).

9. Device (1) according to at least one of the preceding claims, **characterized in that** the silencer structure (14) is formed by the fluid tube (16), the damper tube (20), and a damper material (24), wherein the damper material (24) is arranged in a damper volume (25) formed between the fluid tube (16) and the damper tube (20).

10. Device (1) according to at least one of the preceding claims, **characterized in that** the secondary flow channel (5) and/or the outlet (18) of the secondary flow channel (5) is connected to the exhaust gas system (2) via a closure bypass channel (26) downstream of the channel closure element (9), or the secondary flow channel (5) and/or the outlet (18) of the secondary flow channel (5) is connected to the environment (27) in a fluid-permeable manner.

## Revendications

1. Dispositif (1) de récupération de la chaleur d'un gaz d'échappement qui traverse un système de gaz d'échappement (2) pendant le fonctionnement d'une source de chaleur perdue produisant le gaz d'échappement, le système de gaz d'échappement (2) comportant au moins un dispositif de post-traitement des gaz d'échappement (3) ainsi qu'au moins un ensemble échangeur thermique (4), l'ensemble échangeur thermique (4) étant ici disposé en aval d'un composant du dispositif de post-traitement des gaz d'échappement (3) et à l'intérieur du dispositif de post-traitement des gaz d'échappement (3) et l'ensemble échangeur thermique (4) comportant un canal d'écoulement principal (6) entouré par un canal d'écoulement secondaire (5) étant traversé en fonctionnement de la source de chaleur perdue par le gaz d'échappement ainsi que par un fluide de travail pour le transfert de chaleur dans le fluide de travail, **caractérisé en ce que** l'ensemble échangeur thermique (4) comporte en outre un élément échangeur de chaleur (7) disposé à l'intérieur du canal d'écoulement secondaire (5), dans lequel un élément de fermeture de canal (9) est disposé en aval d'une sortie (8) du canal d'écoulement principal (6) et ainsi en dehors du dispositif de post-traitement des gaz d'échappement (3), lequel sert à réguler le débit volumétrique à travers le canal d'écoulement principal (6) et/ou le canal d'écoulement secondaire (5).

2. Dispositif (1) selon la revendication 1, **caractérisé en ce que** l'élément échangeur de chaleur (7) est conçu comme un serpentin hélicoïdal (10) pouvant être traversé par le fluide de travail à partir d'un tube s'étendant essentiellement en forme de spirale.

3. Dispositif (1) selon les revendications 1 ou 2, **caractérisé en ce que** le dispositif de post-traitement des gaz d'échappement (3) ou un composant (11) du dispositif de post-traitement des gaz d'échappement (3) est conçu comme un catalyseur SCR.

4. Dispositif (1) selon au moins l'une des revendications précédentes, **caractérisé en ce que** l'ensemble échangeur thermique (4) et/ou une entrée (12) du canal d'écoulement principal (6) de l'ensemble échangeur thermique (4) est relié(e) par une liaison active à conduction de fluide, par le biais d'un élément de transition (13) disposé en amont de l'ensemble échangeur thermique (4), compensant des contours de section transversale différents, avec le dispositif de post-traitement des gaz d'échappement (3) ou le composant (11) du dispositif de post-traitement des gaz d'échappement (3).

5. Dispositif (1) selon au moins l'une des revendications précédentes, **caractérisé en ce que** l'ensemble échangeur thermique (4) ou le canal d'écoulement principal (6) de l'ensemble échangeur thermique (4) comporte une structure de silencieux (14) et/ou une structure de silencieux (14) forme une partie du canal d'écoulement principal (6) de l'ensemble échangeur thermique (4).

6. Dispositif (1) selon au moins l'une des revendications précédentes, **caractérisé en ce que** le canal d'écoulement principal (6) est formé par un tube de fluide (16) entouré par un boîtier (15) et/ou le tube d'écoulement secondaire (5) comportant une entrée (17) et une sortie (18) est formé par un espace de fluide (19), qui est conçu entre le tube de fluide (16) et le boîtier (15) entourant le tube de fluide (16).

7. Dispositif (1) selon au moins l'une des revendications précédentes, **caractérisé en ce que** le canal d'écoulement principal (6) est formé par le tube de fluide (16) et un tube d'amortisseur (20) disposé à l'intérieur du tube de fluide (16), dans lequel l'entrée (12) du canal d'écoulement principal (6) est conçue dans le tube de fluide (16) et la sortie (8) du canal d'écoulement principal (6) est conçue dans le tube d'amortisseur (20).

8. Dispositif (1) selon au moins l'une des revendications précédentes, **caractérisé en ce que** le tube d'amortisseur (20) comporte au moins deux sections (21, 22), dans lequel une première section (21) présente un diamètre externe et/ou diamètre interne inférieur au tube de fluide (16) et/ou une seconde section (22) du tube d'amortisseur (20) est conçue comme une zone de transition (23) en forme d'entonnoir, dans lequel un diamètre externe de la zone de transition (23) correspond à un diamètre interne du tube de fluide (16).

9. Dispositif (1) selon au moins l'une des revendications précédentes, **caractérisé en ce que** la structure de silencieux (14) est formée par le tube de fluide (16), le tube d'amortisseur (20) et un matériau d'amortisseur (24), dans lequel le matériau d'amortisseur (24) est disposé dans un volume d'amortisseur (25) marqué entre le tube de fluide (16) et le tube d'amortisseur (20).

10. Dispositif (1) selon au moins l'une des revendications précédentes, **caractérisé en ce que** le canal d'écoulement secondaire (5) et/ou la sortie (18) du canal d'écoulement secondaire (5) est relié(e) de manière perméable au fluide par le biais d'un canal de dérivation de fermeture (26) en aval de l'élément de fermeture de canal (9) avec le système de gaz d'échappement (2) ou le canal d'écoulement secondaire (5) et/ou la sortie (18) du canal d'écoulement secondaire (5) avec l'environnement (27).
